# EUROPÄISCHE PATENTSCHRIFT

(11) **EP 2 134 559 B1**
(45) Veröffentlichungstag und Bekanntmachung des Hinweises auf die Patenterteilung: **14.09.2011**
(21) Anmeldenummer: 08708463.8
(22) Anmeldetag: 30.01.2008
(51) Int. Cl.: B60K 6/387, F16D 48/04

(54) **KUPPLUNGSAKTUATOR**
CLUTCH ACTUATOR
ACTIONNEUR D'EMBRAYAGE

(30) Priorität: 29.03.2007 DE 102007016128
(43) Veröffentlichungstag der Anmeldung: 23.12.2009
(73) Patentinhaber: Robert Bosch GmbH, 70442 Stuttgart (DE)
(72) Erfinder: HERNIER, Markus, 70839 Gerlingen (DE); GREIS, Andreas, 70193 Stuttgart (DE)
(86) Internationale Anmeldenummer: PCT/EP2008/051148
(87) Internationale Veröffentlichungsnummer: WO 2008/119574

(56) Entgegenhaltungen:
- US-A- 5 392 749
- US-A- 5 801 499
- US-A- 5 928 106

## Beschreibung

### Stand der Technik

Aus der Automobiltechnischen Zeitschrift 07-08/2006 Jahrgang 108, Seite 3 ff. ist ein elektrohydraulischer Aktuator für Stell- und Regelaufgaben bei Kupplungen und Getrieben bekannt. Im Bereich Antriebsstrang stellen der derzeitige Trend zu höherem Komfort und Fahrqualität sowie die Forderung nach Senkung des Kraftstoffverbrauchs und das Bestreben der Fahrzeughersteller nach Reduktion der Entwicklungs-, Herstell- und Betriebskosten eine Herausforderung dar. Entwicklungen wie automatisierte Schaltgetriebe und Lastschaltgetriebe mit einer Doppelkupplung und Hybridantriebe sowie Fahrwerkregelsysteme sind von dieser Thematik betroffen. Des Weiteren wird bei fußbetätigten Kupplungen, bedingt durch im Drehmoment stärkere Motoren, oft die Grenze der maximal zumutbaren Kupplungspedalkraft überschritten, weshalb zusätzlich eine Hilfskraft (servounterstüzt) aufgebracht werden muss.

Bei all diesen Aufgaben werden zur Automatisierung der Kupplungen und Getriebe geeignete Aktuaktoren benötigt. Elektrohydraulische oder elektromechanische Varianten sind bisher aus entsprechenden Serienlösungen bekannt. In hydraulischen Systemen werden in der Regel zur Bereitstellung hydraulischer Energie so genannte Power-Packs eingesetzt. Sie umfassen zumeist folgende Komponenten: elektromotorisch angetriebene hydraulische Pumpen, hydraulische Speicher (Prinzipgas/Membran, Gas/Kolben oder Feder/Kolben), mindestens ein Ventil als Speicher-Ladevorrichtung, ein Schaltventil zur Aufschaltung der Speicherenergie auf den Verbraucher, einen Drucksensor zur Erfassung des im hydraulischen Speicher herrschenden Druckes sowie einen Temperatursensor zur Energieüberwachung. Des Weiteren ist in der Regel eine elektronische Steuerung der Speicherladung und der Energieaufschaltung erforderlich.

Zur Steuerung und Regelung von angeschlossenen Betätigungssystemen werden außerdem proportional arbeitende Druckminderventile und/oder Volumenstrom-Regelventile benötigt. Sie werden ihrerseits von einer Steuer- und Regelelektronik betrieben. Dem Vorteil einer sehr schnellen Energiebereitstellung durch solche elektrohydraulische Systeme steht der Nachteil hoher Komplexität mit vielen Bauteilen, großen Bauraum, hohen Gewichts, geringem Gesamtwirkungsgrad sowie hohe Kosten gegenüber. Elektromechanische Aktuatoren sind demgegenüber zwar relativ kompakt und nicht zu teuer, allerdings auch deutlich langsamer und schlechter regelbar als elektrohydraulische Speichersysteme. Zudem muss ihr elektrischer Antrieb direkt neben der zu betätigenden Mechanik angebracht werden, was die Flexibilität und Applizierbarkeit häufig sehr stark einschränkt. Die erreichbare Dynamik wird durch den Gesamtwirkungsgrad des Systems und die maximal zulässige Bordnetzbelastung zum Beispiel in einem Kraftfahrzeug bestimmt.

Derzeit werden verstärkte Anstrengungen auf dem Gebiet der Entwicklung von Hybridantrieben für Kraftfahrzeuge unternommen. Der Nutzen dieser Entwicklungen im Kfz-Bereich liegt hauptsächlich in der Kraftstoffverbrauchsersparnis und den niedrigen Emissionen dieser Antriebe. Des Weiteren besitzen mit einem Hybridantrieb ausgestattete Fahrzeuge aufgrund ihres Antriebstranges mit Automatikgetriebe einen erhöhten Fahrkomfort hinsichtlich eines weitgehend ruckfreien Anfahrbetriebs. Schließlich können die im Allgemeinen als Vollhybride bezeichneten Antriebsvarianten mit zwei Kupplungen rein elektrisch fahren, so dass in bestimmten Fahrsituationen die Fahrgeräuschemission niedriger ist als das vergleichbarer konventioneller Fahrzeuge.

Im weiteren werden auch hydraulische Hybridantriebe entwickelt. Diese Technologie findet derzeit schwerpunktmäßig bei Baumaschinen, Gabelstaplern und für militärische Anwendungszwecke Anwendung.

Bei den im Allgemeinen als Vollhybriden bezeichneten Hybridantriebe im Parallelantriebsstrang trennt eine Kupplung die mindestens eine elektrische Maschine von der Verbrennungskraftmaschine in Situationen, welche von der Betriebsstrategie des implementierten Hybridantriebsstrang als sinnvoll ermittelt werden. In der Regel kann der Fahrer diesen Kupplungsvorgang nicht direkt beeinflussen. Hinsichtlich des Fahrkomforts, aber auch zur optimalen Ausnutzung der Kraftstoffverbrauchs- und Emissionsvorteile beim Hybridantrieb sind sehr kurze Kupplungszeiten vorteilhaft.

Bei heute eingesetzten, insbesondere in Hybridantriebssträngen eingesetzten Kupplungen, werden die Kupplungen elektrisch bzw. mechanisch angesteuert. Derzeit werden hydraulische System bevorzugt, die sich durch die deutlich kürzeren Schaltzeiten auszeichnen.

In US 5,801,499 ist ein Antriebsstrang für ein Kraftfahrzeug mit Hybridantrieb offenbart. Dieses weist eine Getriebekupplung und eine weitere, über ein in einer Ölpumpe erzeugtes Druckniveau betätigh, Kupplung auf.

### Offenbarung der Erfindung

Diese Aufgabe wird durch die Merkmale des Anspruchs 1 gelöst. Es wird vorgeschlagen, bei Kraftstoffeinspritzsystemen, insbesondere bei selbstzündenden Verbrennungskraftmaschinen, die in einem Hochdruckspeichereinspritzsystem vorhandene Hochdruckpumpe bzw. eine Vorförderpumpe zur Bereitstellung eines hydraulischen Druckes in der Größenordnung zwischen 5 bar und 30 bar zur Betätigung einer z.B. in einem Hybridantrieb mit zwei Kupplungen eingesetzten Kupplung heranzuziehen. Damit kann an mindestens einer Kupplung eine sehr kurze Kupplungszeit realisiert werden. Im vorstehenden Zusammenhang wird unter der zweiten Kupplung diejenige Kupplung verstanden, durch welche die Verbrennungskraftmaschine von dem mindestens einen zusätzlichen Antrieb, d.h. der mindestens einen elektrischen oder hydraulischen Maschine getrennt wird.

Bevorzugt wird zur Bereitstellung des Druckes zur Betätigung der zweiten Hybridkupplung zwischen der Verbrennungskraftmaschine und dem mindestens einen elektrischen Antrieb die Hochdruckeinspritzpumpe in einem Kraftstoffsystem für selbstzündende Verbrennungskraftmaschinen eingesetzt. Der Vorteil dieser Lösung liegt im Wegfall einer separat vorzuhaltenden Kupplungsaktuatorik bei gleichzeitiger Verbesserung der Kupplungsschaltzeit im Vergleich zu elektrischen bzw. mechanischen Aktuatoren. Bei Kraftstoffeinspritzsystemen für selbstzündende Verbrennungskraftmaschinen können sowohl die Hochdruckförderaggregate als auch Vorförderaggregate zur Bereitstellung des hydraulischen Druckes für die zweite Hybridkupplung herangezogen werden. Dies ist insbesondere bei Nutzkraftfahrzeugen möglich, wo die hydraulische potentielle Energie zur Betätigung der genannten zweiten Hybridkupplung beispielsweise vorteilhaft hinter dem Pumpenabgang der Vorförderpumpe entnommen werden kann.

Das dort vorliegende Druckniveau in der Größenordnung zwischen 5 bar und 30 bar kann in vorteilhafter Weise zum schnellen Öffnen einer zweiten Kupplung eingesetzt werden, da in dieser Betriebsphase die Verbrennungskraftmaschine und damit auch die Hochdruckpumpe bereits in Betrieb ist und das Druckniveau in der Größenordnung zwischen 5 bar und 30 bar demzufolge auch gestellt werden kann. Das Halten der zweiten Hybridkupplung in geöffnetem Zustand sowie das Schließen derselben, kann auf mechanischem Wege erfolgen oder mit Hilfe eines Druckreservoirs auch auf hydraulischem Wege realisiert werden.

### Kurze Beschreibung der Zeichnungen

Anhand der Zeichnung wird die Erfindung nachstehend eingehender beschrieben.

Die einzige Figur zeigt den Antriebsstrang eines Hybridantriebs mit einer selbstzündenden Verbrennungskraftmaschine und einer Getriebekupplung zwischen einem Fahrzeuggetriebe und einem elektrischen Antrieb sowie einer weiteren, zweiten Kupplung zwischen dem mindestens einen elektrischen Antrieb und der selbstzündenden Verbrennungskraftmaschine.

### Ausführungsformen

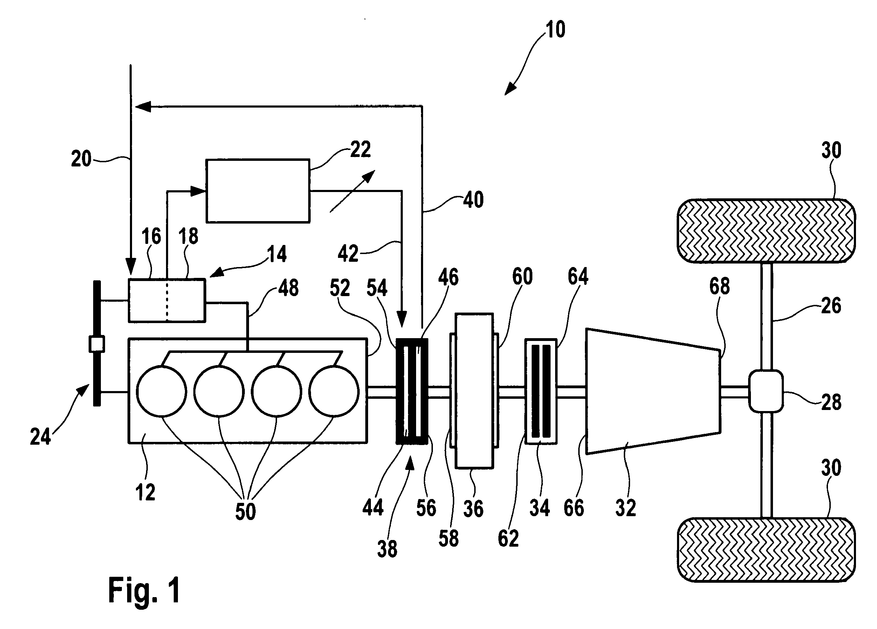

Der Darstellung gemäß Figur 1 ist entnehmbar, dass ein Antriebsstrang 10 eines Kraft- oder Nutzfahrzeuges eine Verbrennungskraftmaschine 12 umfasst, die in dieser Ausführungsform als selbstzündende Verbrennungskraftmaschine ausgebildet ist. Der selbstzündenden Verbrennungskraftmaschine 12 ist ein Kraftstoffförderaggregat 14 zugeordnet, welches eine Vorförderstufe 16 sowie eine Hochdruckförderstufe 18 umfassen kann.

Anstatt der Einheit Kraftstoffförderaggregat mit Vorförderstufe 16 und Hochdruckförderstufe 18 kann das Kraftstoffförderaggregat 14 auch eine separate Vorförderpumpe, die beispielsweise dem Tank zugeordnet sein kann und eine von dieser räumlich getrennte Hochdruckpumpe aufweisen, die beispielsweise unmittelbar einen Hochdruckspeicherkörper (Common-Rail) ein als Kraftstoffversorgungssystems für die selbstzündende Verbrennungskraftmaschine 12 mit dem eingestellten Systemdruck beaufschlagt.

Das in Figur 1 schematisch angedeutete Kraftstoffförderaggregat 14 umfasst in der vorliegenden Ausführungsform die Vorförderstufe 16 sowie die Hochdruckförderstufe 18. Das über die Vorförderstufe 16 stellbare Druckniveau liegt in der Größenordung zwischen 5 bar und 30 bar, während durch die Hochdruckförderstufe 18 des Kraftstoffförderaggregates 14 wesentlich höhere Drücke, d.h. ein Systemdruck von mehr als 2000 bar erzeugt werden kann.

Das Kraftstoffförderaggregat 14 fördert Kraftstoff über eine Zuleitung 20 von einem in der Darstellung gemäß Figur 1 nicht wiedergegebenen Tank.

Wie aus der Prinzipsskizze gemäß Figur 1 hervorgeht, wird das Kraftstoffförderaggregat 14 über einen Ritzelantrieb 24 von der selbstzündenden Verbrennungskraftmaschine 12 aus angetrieben. Ausgangsseitig verläuft vom Kraftstoffförderaggregat 14, bzw. dessen Hochdruckförderstufe 18 eine Hochdruckleitung 48 zu den einzelnen, den Zylindern 50 der Verbrennungskraftmaschine 12 jeweils zugeordneten, hier nicht dargestellten Kraftstoffinjektoren. Über diese wird der unter Systemdruck stehende Kraftstoff in die einzelnen Zylinder 50 der hier als selbstzündenden Verbrennungskraftmaschine ausgeführten Verbrennungskraftmaschine 12 zugeführt.

Der in Figur 1 dargestellte Antriebsstrang 10 umfasst eine angetriebene Achse 26 eines Fahrzeugs, in dem ein Achsantrieb 28 integriert ist. Der Achsantrieb 28 überträgt das Drehmoment auf zwei an der angetriebenen Achse 26 aufgenommene Räder 30. Der Achsantrieb 28 der angetriebenen Achse 26 seinerseits wird über ein Getriebe 32 angetrieben, dessen Getriebeausgang durch Bezugszeichen 68 angedeutet ist und dessen Getriebeeingang durch Bezugszeichen 66 bezeichnet ist.

Der Antriebsstrang 10 gemäß der Darstellung in Figur 1 umfasst des Weiteren mindestens eine elektrische Maschine 36, die sowohl im Motormodus als auch im Generatormodus betreibbar ist. Zwischen einer Ausgangsseite 60 des mindestens einen elektrischen Antriebes 36 und dem Getriebeeingang 66 des Getriebes 32 befindet sich eine Getriebekupplung 34, deren Eingang durch Bezugszeichen 62 und deren Ausgangsseite durch Bezugszeichen 64 bezeichnet ist. Die in Bezug auf die im Antriebsstrang 10 enthaltene elektrische Maschine 36 ist festzuhalten, dass deren Ausgangsseite durch Bezugszeichen 60 und deren Eingangsseite durch Bezugszeichen 58 bezeichnet ist. Zwischen dem mindestens einen elektrischen Antrieb 36 des Antriebsstrangs 10 und einer Abtriebsseite 52 der selbstzündenden Verbrennungskraftmaschine 12 befindet sich eine weitere, zweite Kupplung 38.

Die weitere zweite Kupplung 38 befindet sich zwischen der Abtriebsseite 52 der selbstzündenden Verbrennungskraftmaschine 12 und der Eingangsseite 58 des mindestens einen elektrischen Antriebes 36 des Antriebsstrangs 10. Die weitere zweite Kupplung 38 umfasst eine erste Kupplungsscheibe 44 sowie eine weitere, zweite Kupplungsscheibe 46. Wie aus der Darstellung gemäß Figur 1 hervorgeht, wird die weitere zweite Kupplung 38 von einem hinter der Hochdruckförderstufe 18 des Kraftstoffförderaggregates 14 angebrachten Schaltventil 22 aus angesteuert, über welches die in einer Vorförderstufe 16 abgezweigten Drücke steuerbar sind. Eingangsseitig ist das Schaltventil 22 über die Vorförderstufe 16 des Kraftstoffförderaggregates 14 angesteuert, ausgangsseitig verläuft vom Schaltventil 22 eine Ansteuerleitung 42 zur zweiten Kupplung 38 zwischen der selbstzündenden Verbrennungskraftmaschine 12 und dem mindestens einen elektrischen Antrieb 36.

Wie aus der Darstellung gemäß Figur 1 hervorgeht, wird das Kraftstoffförderaggregat 14, d.h. die Vorförderstufe 16 und die Hochdruckförderstufe 18 durch die selbstzündende Verbrennungskraftmaschine 12 angetrieben. Der Kraftstoff wird über die Zuleitung 20 vom Tank entnommen und im Kraftstoffförderaggregat 14 komprimiert. Anschließend wird der Kraftstoff unter Systemdruck über die Hochdruckleitung 48 den einzelnen Zylindern 50 der selbstzündenden Verbrennungskraftmaschine 12 zugeleitet und in deren Brennräume eingespritzt. In der in Figur 1 dargestellten Ausführungsform wird der auf Vorförderdruck komprimierte Kraftstoff an der Vorförderstufe 16 entnommen und dem schnellschaltenden Schaltventils 22 zugeleitet. Über das schnellschaltende Schaltventil 22 erfolgt über die Ansteuerleitung 42 zur zweiten Kupplung 38 des Antriebsstranges 10 die Betätigung der weiteren, zweiten Kupplung 38. Vorzugsweise wird die hydraulische Energie zum schnellen Öffnen der Kupplung 38, d.h. zum schnellen Auseinanderbewegen der ersten Kupplungsscheibe 44 und der zweiten Kupplungsscheibe 46 verwendet. In dieser Betriebsphase des Antriebsstranges 10, d.h. bei laufender Verbrennungskraftmaschine 12 ist auch das Kraftstoffförderaggregat 14 in Betrieb, welches von der Verbrennungskraftmaschine 12 über den Ritzelantrieb 24 angetrieben ist. Die weitere zweite Kupplung 38 wird mechanisch im geöffneten Zustand oder mit Hilfe eines Druckreservoirs mechanisch gehalten; ferner kann das Schließen der zweiten, weiteren Kupplung 38 ebenfalls auf mechanischem Wege, so zum Beispiel über Tellerfedernpakete oder dergleichen oder mit Hilfe eines Druckreservoirs hydraulisch realisiert werden.

Der schematisch in der Darstellung gemäß Figur 1 dargestellte Antriebsstrang 10 zur Verwendung in einem Kraftfahrzeug mit Hybridantrieb lässt sich zum Beispiel derart betreiben, dass im Schiebebetrieb des Kraftfahrzeuges, der zum Beispiel bei einem Zurücklegen einer Gefällestrecke auftritt, das Fahrzeug über die angetriebene Achse 26, den Achsantrieb 28, den Getriebeausgang 68 mit einem Drehmoment beaufschlagt, welches über den Getriebeeingang 66 an die Getriebekupplung 34 übertragen wird. Über die Getriebekupplung 34 bzw. deren Eingangsseite 62 wird die mindestens eine elektrische Maschine 36 angetrieben, die in diesem Falle im Generatormodus betrieben wird und die Hochvoltbatterie des Kraftfahrzeuges mit Hybridantrieb auflädt. In diesem Falle sind der mindestens eine elektrische Antrieb 36 und die selbstzündende Verbrennungskraftmaschine 12 durch die offen stehende weitere, zweite Kupplung 38 mechanisch voneinander getrennt.

Im Betriebsmodus "elektrisches Fahren" sind die selbstzündende Verbrennungskraftmaschine 12 sowie der mindestens eine elektrische Antrieb 36 durch die in Offenstellung befindliche weitere, zweite Kupplung 38 ebenfalls voneinander getrennt. In diesem Falle wird die weitere, zweite Kupplung 38 sowohl mechanisch offen gehalten, als auch auf mechanischem Wege geschlossen. Alternativ dazu kann das Schließen der weiteren zweiten Kupplung 38 im Betriebsmodus elektrisches Fahren auch über ein Druckreservoir vorgenommen werden. Im Betriebsmodus "elektrisches Fahren" oder "regeneratives Bremsen" wird vor den jeweiligen Übergängen in die beiden angesprochenen Betriebsmodi die weitere, zweite Kupplung 38 bei noch laufender Verbrennungskraftmaschine 12 geöffnet. Danach erfolgt im Betriebsmodus "elektrisches Fahren" oder im Betriebsmodus "regeneratives Bremsen" das Abschalten der Verbrennungskraftmaschine und ein mechanisches Offenhalten der zuvor bei laufender Verbrennungskraftmaschine 12 geöffneten weiteren zweiten Kupplung 38. Zum erneuten Starten der Verbrennungskraftmaschine wird die weitere zweite Kupplung 38 in den angesprochenen Betriebsmodi auf mechanischem Wege geschlossen, um die Verbrennungskraftmaschine 12 erneut zu starten.

Bei laufender Verbrennungskraftmaschine 12 wird das die Vorförderstufe 16 und die Hochdruckförderstufe 18 aufweisende Kraftstoffförderaggregat 14 über den Ritzelantrieb 24 von der selbstzündenden Verbrennungskraftmaschine 12 aus mit angetrieben. In diesem Fall ist das schnellschaltende Schaltventil 22 stets mit einem zur Ansteuerung der weiteren zweiten Kupplung 38 zur Verfügung stehenden unter einem Druckniveau zwischen 5 bar und 30 bar stehenden Fluidvorrats beaufschlagt, so dass im Betriebsmodus konventionelles Fahren die weitere zweite Kupplung 38 so betätigt werden kann, dass diese geschlossen steht und über die weitere, zweite Kupplung 38 der mindestens eine elektrische Antrieb 36 und die Getriebekupplung 34 über das Getriebe 32 mit der einen angetriebenen Achse 26 mechanisch in Verbindung steht. Die Rücklaufmenge, die nach einem Schaltvorgang an der weiteren zweiten Kupplung 38 entsteht, wird über eine Rücklaufleitung 40 der Zuleitung 20 vom Tank des Kraftstoffeinspritzsystems wieder zugeführt. Bevorzugt wird das Kraftstoffförderaggregat 14 mit samt der Vorförderstufe 16 und der Hochdruckförderstufe 18 zum schnellen Öffnen der weiteren, zweiten Kupplung 38 eingesetzt, um gegebenenfalls in den Betriebsmodus "elektrisches Fahren" überzugehen, indem der Antrieb der mindestens einen angetriebenen Achse 26 über den mindestens einen elektrischen Antrieb 36 die geschlossene Getriebekupplung 34 und das Fahrzeuggetriebe 32 erfolgt. In diesem Fall ist der Getriebeeingang 66 von der geschlossenen Getriebekupplung 34 beaufschlagt, deren Eingangsseite 62 wiederum von der mindestens einen im Motor betriebenen elektrischen Maschine 36 angetrieben ist.

## Patentansprüche

1. Antriebsstrang (10) für ein Kraftfahrzeug mit Hybridantrieb mit einer Verbrennungskraftmaschine (12) und mindestens einer elektrischen oder hydraulischen Maschine (36), einem Fahrzeuggetriebe (32) und einer Getriebekupplung (34), wobei eine weitere Kupplung (38) über ein in einem Förderaggregat (14, 16) erzeugtes Druckniveau betätigbar ist, **dadurch gekennzeichnet, dass** die weitere zweite Kupplung (38) mit einem Druckniveau beaufschlagt ist, welches in einer Vorförderstufe (16) eines Kraftstoffförderaggregates (14) eines Kraftstoffeinspritzsystems erzeugt ist.

2. Antriebsstrang (10) gemäß Anspruch 1, **dadurch gekennzeichnet, dass** das Druckniveau zur Betätigung der weiteren, zweiten Kupplung (38) über eine einen Kraftstofftank zugeordnete Vorförderpumpe erzeugt ist.

3. Antriebsstrang (10) gemäß Anspruch 1 oder 2, **dadurch gekennzeichnet, dass** das Druckniveau für die weitere, zweite Kupplung (38) im Antriebsstrang (10) zwischen 5 bar und 30 bar liegt.

4. Antriebsstrang (10) gemäß einem oder mehrerer der vorhergehenden Ansprüche, **dadurch gekennzeichnet, dass** die hydraulische potentielle Energie zur Betätigung der weiteren, zweiten Kupplung (38) hinter einem Pumpenabgang der Vorförderstufe (16) bzw. einer separaten Vorförderpumpe abgenommen wird.

5. Antriebsstrang (10) gemäß einem oder mehrerer der vorhergehenden Ansprüche, **dadurch gekennzeichnet, dass** zwischen der Vorförderstufe (16) des Kraftstoffförderaggregates (14) oder einer separaten Vorförderpumpe ein schnellschaltendes Ventil (22) aufgenommen ist, von dem aus sich eine Ansteuerleitung (42) zu der weiteren, zweiten Kupplung (38) erstreckt.

6. Antriebsstrang (10) gemäß einem oder mehrerer der vorhergehenden Ansprüche, **dadurch gekennzeichnet, dass** sich von der weiteren, zweiten Kupplung eine Rücklaufleitung (40) erstreckt, die in eine Zuleitung (20) zwischen einem Tank des Kraftfahrzeuges und dem Kraftstoffförderaggregat (14) mündet.

## Claims

1. Drive train (10) for a motor vehicle having a hybrid drive with an internal combustion engine (12) and at least one electric or hydraulic engine (36), a vehicle transmission (32) and a transmission clutch (34), wherein a further clutch (38) is actuable via a pressure level generated in a feed assembly (14, 16), **characterized in that** the further, second clutch (38) is acted upon by a pressure level which is generated in a pre-feed stage (16) of a fuel feed assembly (14) of a fuel injection system.

2. Drive train (10) according to Claim 1, **characterized in that** the pressure level for actuating the further, second clutch (38) is generated via a pre-feed pump assigned to a fuel tank.

3. Drive train (10) according to Claim 1 or 2, **characterized in that** the pressure level of the further, second clutch (38) in the drive train (10) is between 5 bar and 30 bar.

4. Drive train (10) according to one or more of the preceding claims, **characterized in that** the hydraulic potential energy for actuating the further, second clutch (38) is taken off downstream of a pump output of the pre-feed stage (16) or of a separate pre-feed pump.

5. Drive train (10) according to one or more of the preceding claims, **characterized in that** a rapid-switching valve (22), from which an activating line (42) to the further, second clutch (38) extends, is accommodated between the pre-feed stage (16) of the fuel feed assembly (14) or of a separate pre-feed pump.

6. Drive train (10) according to one or more of the preceding claims, **characterized in that** a return line (40) extends from the further, second clutch and leads into a feed line (20) between a tank of the motor vehicle and the fuel feed assembly (14).

## Revendications

1. Chaîne cinématique (10) pour un véhicule automobile à entraînement hybride, comprenant un moteur à combustion interne (12) et au moins une machine électrique ou hydraulique (36), une transmission de véhicule (32) et un embrayage de transmission (34), un embrayage supplémentaire (38) pouvant être actionné par le biais d'un niveau de pression produit dans un groupe d'alimentation (14, 16), **caractérisée en ce que** le deuxième embrayage supplémentaire (38) est sollicité par un niveau de pression qui est produit dans un étage de pré-alimentation (16) d'un groupe d'alimentation en carburant (14) d'un système d'injection de carburant.

2. Chaîne cinématique (10) selon la revendication 1, **caractérisée en ce que** le niveau de pression est produit pour actionner le deuxième embrayage supplémentaire (38) par le biais d'une pompe de pré-alimentation associée à un réservoir de carburant.

3. Chaîne cinématique (10) selon la revendication 1 ou 2, **caractérisée en ce que** le niveau de pression pour le deuxième embrayage supplémentaire (38) dans la chaîne cinématique (10) est compris entre 5 bar et 30 bar.

4. Chaîne cinématique (10) selon l'une quelconque ou plusieurs des revendications précédentes, **caractérisée en ce que** l'énergie hydraulique potentielle pour l'actionnement du deuxième embrayage supplémentaire (38) est prélevée derrière une sortie de pompe de l'étage de pré-alimentation (16) ou d'une pompe de pré-alimentation séparée.

5. Chaîne cinématique (10) selon l'une quelconque ou plusieurs des revendications précédentes, **caractérisée en ce qu'**entre l'étage de pré-alimentation (16) du groupe d'alimentation en carburant (14) ou une pompe de pré-alimentation séparée est reçue une soupape à réponse rapide (22), de laquelle s'étend une conduite de commande (42) allant au deuxième embrayage supplémentaire (38).

6. Chaîne cinématique (10) selon l'une quelconque ou plusieurs des revendications précédentes, **caractérisée en ce qu'**une conduite de retour (40) s'étend depuis le deuxième embrayage supplémentaire, et débouche dans une conduite d'amenée (20) entre un réservoir du véhicule automobile et le groupe d'alimentation en carburant (14).
